# EUROPEAN PATENT SPECIFICATION

(11) **EP 1 311 103 B1**
(45) Date of publication and mention of the grant of the patent: **21.07.2010**
(21) Application number: 02024819.1
(22) Date of filing: 07.11.2002
(51) Int. Cl.: H04L 29/06, H04M 3/42

(54) **Method for integration of PBX systems with SIP networks**
Verfahren zur Integration einer privaten Nebenstellenanlage in SIPNetzen
Méthode pour intégrer un autocommutateur privé dans un réseau SIP

(30) Priority: 07.11.2001 US 336971 P; 12.02.2002 US 74340
(43) Date of publication of application: 14.05.2003
(73) Proprietor: Alcatel Lucent, 75008 Paris (FR)
(72) Inventor: Wengrovitz, Michael S., Concord, MA 01742 (US); De Almeida, Joao Eduardo C., Derry, NH 03038 (US)
(74) Representative: Urlichs, Stefan

(56) References cited:
- WO-A-01/37501
- WO-A-01/44890
- US-A1- 2001 028 649

## Description

### FIELD OF THE INVENTION

This invention relates generally to Internet telephony, and more particularly, to integrating a legacy Private Branch Exchange (PBX) system with a Session Internet Protocol (SIP) network.

### BACKGROUND OF INVENTION

Legacy Private Branch Exchange (PBX) systems allow a number of users to share a smaller set of telephone lines that are connected to a public telephone network (PSTN). Since it has been more cost effective to purchase a PBX switch and deploy it within a facility than pay monthly access fees for connecting every telephone to a switch in a public network, usage of legacy PBXs is currently widespread.

With the advent of Session Initiation Protocol (SIP), a powerful signaling protocol for creating, modifying, and terminating multimedia sessions, including Internet telephone calls between one or more SIP-endpoints, many legacy PBX users want to migrate portions of the SIP technology into their existing infrastructure so that they can (1) retain all of their existing functionality, (2) take advantage of the many services SIP provides and (3) avoid the cost of purchasing a new IP-PBX system and its associated equipment (e.g., user sets) that already (or can as an option) internally incorporates the SIP technology. Details about the SIP signaling protocol are set forth in Internet Engineering Task Force Request for Comment 2543 entitled "SIP: Session Initiation Protocol," March 1999 (hereinafter referred to as RFC 2543), SIP provides an alternative to PBX- or H.323-signaled telephony.

Accordingly, there is a need for a hybrid system that externally integrates a PBX system with a SIP network.

US 2001/0028649 A1 discloses a system for providing third-party call control in a telecommunications environment. The system comprises a call-control mechanism for providing service logic and routing intelligence, a control application for providing service-logic description and command instruction for implementing third-party controlled call connections, a call-switching mechanism for providing an abstract state of switching matrix and for commutation of external and internal call legs and a commutation application for making and breaking call connections according to commands sent from the control application. The call-control mechanism, using the control application, sends primitive text commands to the call-switching mechanism, which utilizing the commutation application, receives, reads and implements the text commands containing all of the service logic and instructions required to successfully construct call connections and wherein the call-switching mechanism by virtue of the commutation application sends notification of success or failure regarding implementation of received commands back to the control application.

### SUMMARY OF THE INVENTION

The present invention relates to an adapter, as defined by claim 1 and a method of operating an adapter as defined by claims 12, 38. The adapter has a converter for translating between the telecommunication signalling and voice in the PBX domain, referred to as private digital signalling and voice (PDSV), and the packetized SIP signalling and voice in the IP network domain. This enables SIP User Agents to access the telephone sets and features in an existing legacy PBX system, to make and place calls to and from the public switched telephone network (PSTN), and to continue to access other SIP User Agents and services on the SIP network. The present invention is particularly advantageous in that existing legacy PBX switches and telephone sets can be fully integrated with the SIP network with no changes to the PBX or telephone set.

According to one embodiment of the invention, a SIP adapter module (SAM) of the invention is connected directly to each existing telephone set, to the existing PBX switch, and to the SIP network via IP. The SAM is preferably located in close proximity to the telephone set to which it is connected. In some cases, if the existing telephone sets have an internal cavity, the SAM may be located within the telephone set itself. Alternately, the SAM may be located remotely from the telephone set to which it is connected.

According to another embodiment, the invention is directed to a telephony communications network that includes a communications interface receiving an application layer control protocol message transmitted by a first telephony unit, an adapter coupled to the communications interface, the adapter translating the application layer control protocol message into a telephony signaling code, and a second telephony unit coupled to the adapter for receiving the telephony signaling code.

According to another embodiment, the invention is directed to a telephony communications network that includes a first telephony unit for generating a telephony signaling code, an adapter coupled to the first telephony unit, the adapter translating the telephony signaling code into an application layer control protocol message, and a communications interface coupled to the adapter for transmitting the message over a communications network.

According to another embodiment, the invention is directed to a telephony communications network that includes a first telephony unit for generating a first telephony signaling code, a PBX coupled to the first telephony unit for converting the first telephony signaling code into a second telephony signaling code, an adapter coupled to the PBX for translating the second telephony signaling code into an application layer control protocol message, a first communications interface coupled to the adapter for transmitting the second telephony signal code over a first communications network, and a second communications interface coupled to the adapter for transmitting the message over a second communications network.

According to another embodiment, the invention is directed to a telephony communications network that includes a communications interface receiving a first application layer control protocol message transmitted by a first telephony unit, a server coupled to the communications interface for receiving the first application layer control protocol message and generating a second application layer control protocol message to the first telephony unit and a third application layer control protocol message, and an adapter for receiving the third application layer control protocol message, for generating a fourth application layer protocol message to the first telephony unit wherein the first telephony unit generates a fifth application layer control protocol message to the adapter, and for translating the fifth application layer control protocol message into a first telephony signaling code.

According to another embodiment, the invention is directed to a telephony communications network that includes a telephony unit and an adapter coupled to the telephony unit, the adapter comprising a signaling interface receiving a telephony signaling code from a telephony unit, a processor coupled to the signaling interface, the processor configured to translate the telephony signaling code into an application layer control protocol message, and a network interface coupled to the processor for transmitting the message over a communications network.

According to another embodiment, the invention is directed to a telephony communications method that includes receiving an application layer control protocol message transmitted by a first telephony unit, translating the application layer control protocol message into a telephony signaling code, transmitting the telephony signaling code, and receiving the telephony signaling code.

According to another embodiment, the invention is directed to a telephony communications method that includes generating a telephony signaling code, translating the telephony signaling code into an application layer control protocol message, and transmitting the application layer control protocol message over the communications network.

According to another embodiment, the invention is directed to a telephony communications method that includes generating a first telephony signaling code, converting the first telephony signaling code into a second telephony signaling code, translating the second telephony signaling code into an application layer control protocol message, transmitting the second telephony signal code over a first communications network, and transmitting the message over a second communications network.

According to another embodiment, the invention is directed to a telephony communications method that includes receiving a first application layer control protocol message transmitted by a first telephony unit, generating a second application layer control protocol message to a first telephony unit, generating a third application layer control protocol message to an adapter, generating a fourth application layer protocol message to the first telephony unit, generating a fifth application layer control protocol message to the adapter, and translating the fifth application layer control protocol message into a first telephony signaling code.

It should be appreciated that the present invention allows conventional digital telephone sets and SIP user agents to enjoy both the full set of PBX functionality provided by existing SIP servers and SIP services provided by existing SIP servers.

### BRIEF DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a distributed integration system for coupling a PBX and a telephone to an IP network using a SIP Adapter Module (SAM) according to one embodiment of the invention;
FIG. 2 is a functional block diagram of a process for a telephone to receive a SIP call using a SAM according to one embodiment of the invention;
FIG. 3 is a functional block diagram of a process for a telephone to make a SIP call using a SAM according to one embodiment of the invention;
FIG. 4A is a functional block diagram of a process for a SIP user agent to answer a call that has been forked to it and a telephone set by using a SAM according to one embodiment of the invention;
FIG. 4B is a functional block diagram of a process for a telephone set to answer a call that has been forked to it and a SIP user agent by using a SAM according to one embodiment of the invention;
FIG. 5 is a functional block diagram of a process for an incoming call from a PSTN to be gatewayed to a SIP user agent by a SAM according to one embodiment of the invention;
FIG. 6 is a functional block diagram of a process for a call from a SIP User Agent to be gatewayed as an outgoing call to a PSTN by a SAM according to one embodiment of the invention;
FIG. 7 is a functional block diagram of the SAM processing module; and
FIG. 8 is a functional block diagram of a SIP Adapter Chassis (SAC) according to one embodiment of the invention.

### DETAILED DESCRIPTION OF THE SPECIFIC EMBODIMENTS

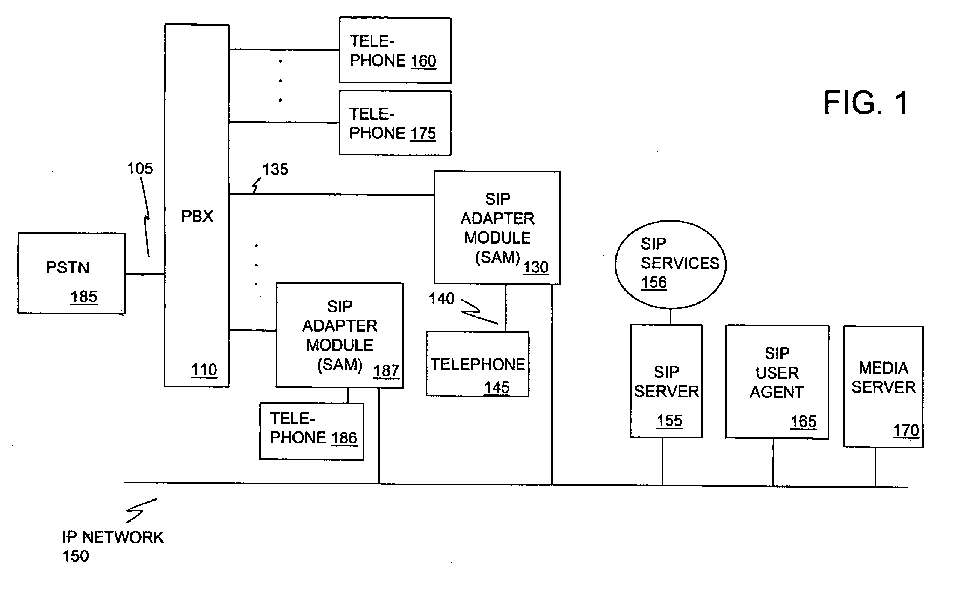

FIG. 1 is a schematic block diagram of a distributed integration system for coupling a PBX and a telephone to an IP network using a SIP Adapter Module (SAM) according to one embodiment of the invention. The system includes telephone 145 initiating a call that is directed to SIP user agent 165 over a IP network 150, such as, for example, a wide area network, and over a private network 140, such as, for example, a local area network, private network and/or the like. Communication between telephone 160, 175, 186, 145, PBX 110 and SAM 130 use private digital signaling and voice (PDSV) to exchange signaling and voice.

The system also includes SIP user agent 165 initiating a call that is directed to telephone 145 over IP network 150, such as, for example, a wide area network, and. over private network 140, such as, for example, a local area network, private network and/or the like, using an IP signal, where the IP signal is preferably a SIP message and/or a Real-Time Transport Protocol (RTP) for media exchange.

The system also includes PSTN 185 initiating a call that is directed to SIP user agent 165 over IP network 150 and networks 135, 105, using a PBX 110, and SIP Adapter Module (SAM) 130. The system also includes SIP user agent 165 initiating a call that is directed to PSTN 185 over IP network 150 and networks 135, 105, using a PBX 110 and SAM 130.

The system also includes PSTN 185 initiating a call that is directed to telephone 145 over networks 105, 135, 140, PBX 110, and SAM 130. The telephone 145, network 135, 140, and PBX 110 preferably adhere to private protocols. The network 105 preferably adhere to public protocols. The system also includes telephone 145 initiating a call that is directed to PSTN 185 over networks 135, 140, 105, PBX 110, and SAM 130. The telephone 145, network 135, 140, and PBX 110 preferably adhere to private protocols. The network 105 preferably adhere to public protocols.

In a configuration with a plurality of SAMs, the plurality of SAMs may be located within a SIP Adapter Chassis (SAC) that shares internal processing, communication and other resources.

The SIP user agent 165 is preferably a SIP-enabled telephone, hand phone, personal computer, switch, router, handset, input/output cable, keyboard, keypad, display and/or the like for receiving and/or transmitting voice and/or data and allowing a voice and/or data conversation between a caller and callee. A SIP user agent and/or telephone may make and/or receive a call from another SIP user agent and/or telephone. The telephones 145, 160, 175, 186 are preferably a digital protocol device such as, for example, a legacy digital phone and/or the like. Telephone 145, 160, 175, 186 may also be an analog, IP and/or a software phone and/or the like. PSTN 185 is preferably a public switched telephone network. Telephones 160, 175 are preferably non-SAM enabled telephones coupled to PBX 110. SAMs 130, 187 are preferably one of a plurality of SAM devices coupled to PBX 110.

The communication system of FIG. 1 further includes SIP server 155 preferably routing SIP calls between SAM 130 and a SIP user agent, such as SIP user agent 165. SAM 130 preferably translates calls to/from PBX 110 from/to IP network 150, translates calls to/from PBX 110 from/to telephone 145, and translates calls to/from telephone 145 from/to IP network 150. SIP user agent 165 may also subscribe to SAM 130 so that SIP user agent 165 will no longer need to use SIP server 155 to get calls to/from SAM 130. SIP server 155 is preferably a SIP proxy server, SIP redirect server and/or the like. The SIP server 155 further makes available to SIP user agent 165, PSTN 185 and telephone 145 various SIP services 156 such as, for example, call forking, caller preferences, encryption, authentication, firewall control, billing, call routing, and the like.

Media server 170 preferably provides storage, network interfaces, memory and support for all forms of multimedia communication and/or the like.

According to one embodiment of the invention, SAM 130 and telephone 145 reside in two separate machines coupled to each other over private network 140. According to another embodiment of the invention, SAM 130 and telephone 145 reside in a single machine.

In general, SAM 130 provides for the translation between IP and PDSV, where the IP may be SIP signaling plus Real-Time Transport Protocol (RTP) media, and the PDSV may be Private Digital Signaling and Voice protocol used by the PBX to exchange signaling and voice to/from telephone sets 160, 175, 145, 186.

The translation, which is traditional table lookup and/or algorithmic, between PDSV and IP occurs when SIP user agent 165 is communicating through SAM 130 to the telephone 145 or through the SAM to another telephone or PSTN via the PBX 110. When telephone 145 is in communication with PBX 110, no translation between PDSV and IP occur.

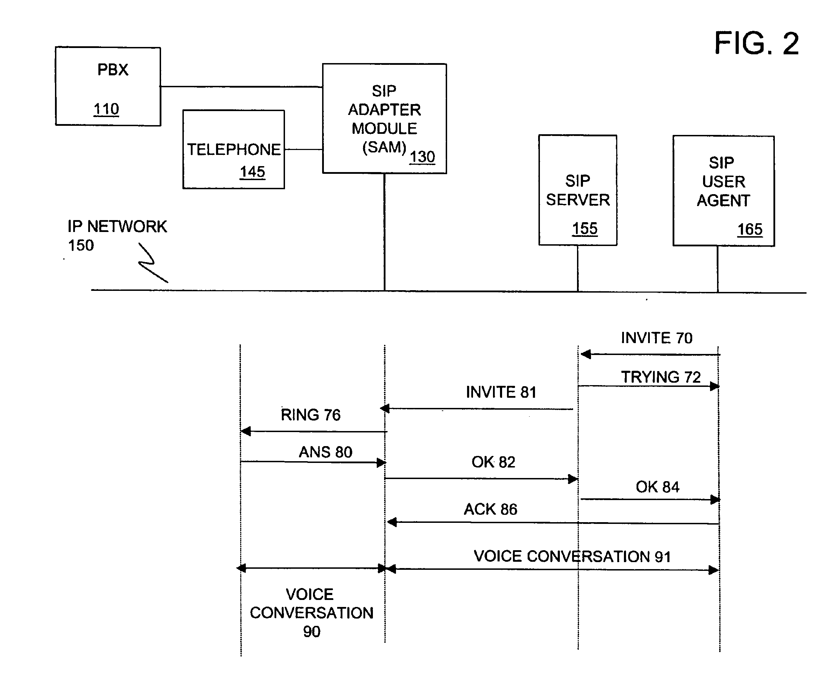

FIG. 2 is a functional block diagram of a process for a telephone to receive a SIP call using a SAM according to one embodiment of the invention. In step 70 of the illustrated embodiment, SIP server 155 receives an IP INVITE message from SIP user agent 165, requesting to be connected to telephone 145. SIP server 155 uses the INVITE information contained in the INVITE message to determine a most correct address to which to route the connection request. The INVITE message may, for example, include standard routing information in the "From:", "To:", "Contact:" and/or other fields within the INVITE message header.

The SIP server 155 accepts the INVITE message and in step 72, transmits an IP TRYING message to SIP user agent 165 to indicate that action is being taken on behalf of the call, but that telephone 145 has not yet been located. SAM 130 translates the SIP signal into a PDSV code and, in step 76, issues the appropriate PDSV RING signal to notify telephone 145 that an INVITE message has been received by SAM 130 for telephone 145. SAM 130 may notify telephone 145 of the message by, for example, causing the user's telephone to ring. In step 76, SAM 130 preferably also sends other PDSV data to telephone 145, such as, for example, caller-ID data and/or the like which has been derived through translation of SIP header information in the INVITE message of step 81.

If telephone 145 answers the RING by, for example, answering the user's telephone, telephone 145 responds to the RING in step 80 with the appropriate PDSV answer code (ANS) which is returned to SAM 130. SAM 130 replies to the SIP server 155 in step 82 with a SIP OK message to indicate to SIP server 155 that telephone 145 is ready for voice conversation and in step 84, SIP server 155 preferably sends a SIP OK message to SIP user agent 165 to indicate that telephone 145 is ready for voice conversation. In step 86, SIP user agent 165 preferably confirms that it received the OK message in step 84 and is ready for voice conversation by transmitting an SIP acknowledgement (ACK) message to SAM 130. Once the ACK has been received by SAM 130 in step 86, voice and/or data communication preferably ensues between SIP user agent 165 and telephone 145 in step 90, 91.

Consequently, in step 91, IP voice is preferably received from SIP user agent 165 at SAM 130 and SAM 130 preferably translates the IP voice into a suitable PDSV voice to transmit to telephone 145 in step 90. Likewise, in step 90, telephone 145 preferably sends PDSV voice to SAM 130 and SAM 130 preferably translates the PDSV voice into IP voice, which is then transmitted to SIP user agent 165 in step 91. The transfer of information here preferably occurs in a manner that is transparent to SIP user agent 165 and telephone 145. In addition, suitable digital encryption and signature techniques conventional in the art may be employed to assure authorized access to data, and to further ensure that the data are authentic.

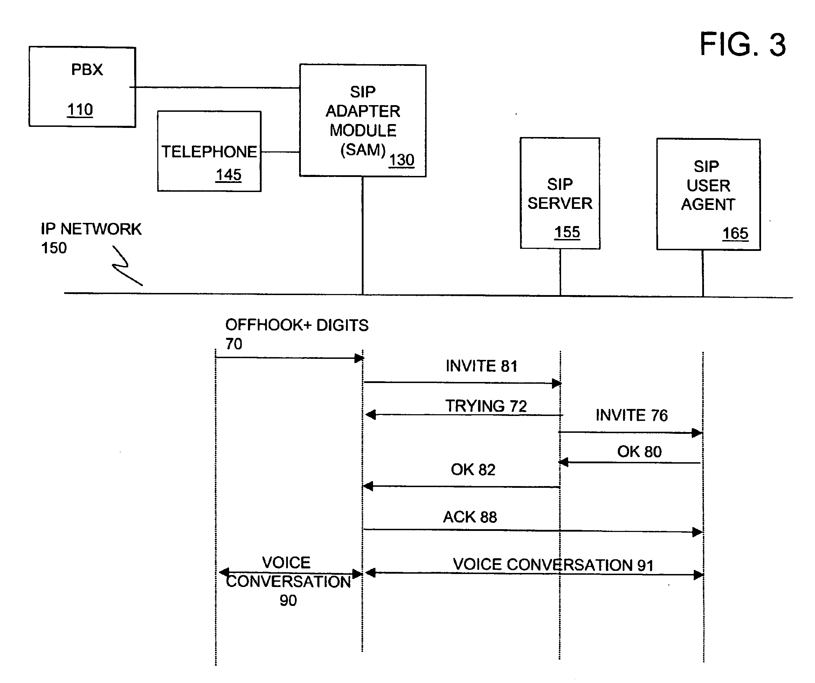

FIG. 3 is a functional block diagram of a process for a telephone to make a SIP call using a SAM according to one embodiment of the invention. In step 70, SAM 130 receives PDSV OFFHOOK+DIGITS code from the telephone 145, preferably requesting to be connected to SIP user agent 165. SAM 130 preferably contains a standard dial-plan which recognizes the PDSV OFFHOOK+DIGITS code in step 70 to determine whether to forward code to SIP user agent 165 or to some other end-point and/or the like. In step 81, since telephone 145 is requesting to be connected to SIP user agent 165, SAM 130 preferably generates a SIP INVITE message to SIP server 155. SIP server 155 uses the INVITE information contained in the INVITE message of step 81 to determine a most correct address to which to route the connection request. The INVITE message of step 81 may, for example, include standard routing information in the "From:", "To:", "Contact:" and/or other fields within the INVITE message header. INVITE of step 81 may also be forwarded through additional SIP Servers (not shown) or directly to SIP user agent 165.

SIP server 155 accepts the SIP INVITE message of step 81 and in step 72, sends a SIP TRYING message to SAM 130 that SIP server 155 is searching for SIP user agent 165. Once SIP server 155 locates SIP user agent 165, it issues a SIP INVITE signal in step 76 to notify SIP user agent 165 that it has been called. In step 76, SIP server 155 preferably also sends other data to SIP user agent 165, such as, for example, caller-ID data.

If SIP user agent 165 answers the call SIP user agent 165 preferably responds with an appropriate SIP OK message to SIP server 155 in step 80 and, in step 82, SIP server 155 preferably replies to SAM 130 with a SIP OK message to indicate to SAM 130 that SIP user agent 165 is ready for voice conversation. In step 88, SAM 130 preferably acknowledges (ACK), with a SIP ACK to SIP user agent 165 signifying that the connection is ready and in step 90, 91 data and/or voice ensues between SIP user agent 165 and telephone 145.

Consequently, in step 90, PDSV voice is preferably received from telephone 145 at SAM 130 and SAM 130 preferably translates the PDSV voice to IP voice and transmits the voice to SIP user agent 165 in step 91. Likewise, SIP user agent 165 preferably sends a suitable IP voice to SAM 130 and SAM 130 preferably translates the IP voice into a PDSV voice which is transmitted to telephone 145. The transfer of information here preferably occurs in a manner that is transparent to the SIP user agent 165 and telephone 145. In addition, suitable digital encryption and signature techniques conventional in the art may be employed to assure authorized access to data, and to further ensure that the data are authentic.

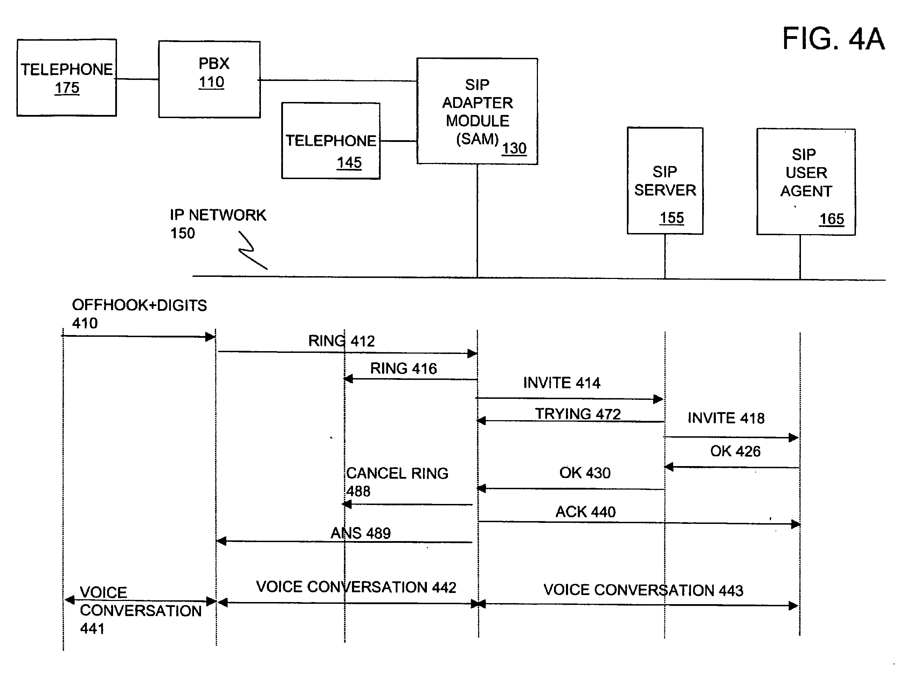

FIG. 4A is a functional block diagram of a process for a SIP user agent to answer a call that has been forked to it and a telephone set by using a SAM according to one embodiment of the invention. In step 410, PBX 110 receives PDSV OFFHOOK+DIGITS code from telephone 175, preferably requesting to be connected to SIP user agent 165 or telephone 145, whichever one answers first. In step 412, PBX 110 preferably issues a PDSV RING code to SAM 130. SAM 130 preferably contains a standard dial-plan that determines whether to forward the message to IP user agent 165 and/or telephone 145 and/or some other end-point and/or the like. In this case, SAM 130 preferably determines that the request is to attempt connect to both telephone 145 and SIP user agent 165 and to establish a voice connection to whichever answers first. In step 416, SAM 130 preferably issues a PDSV RING code to telephone 145. In step 414, which may occur concurrently with step 416, SAM 130 issues a SIP INVITE message to SIP server 155 for SIP user agent 165. SIP server 155 uses the SIP INVITE information contained in the step 414 INVITE message to determine a most correct address to which to route the connection request. The INVITE message of step 414 may, for example, include standard routing information in the "From:", "To:", "Contact:" and/or other fields within the INVITE message header. The INVITE of step 414 may also be forwarded through additional SIP Servers (not shown) or directly to telephone 165.

SIP server 155 accepts the SIP INVITE message of step 414 and then issues a SIP TRYING message to SAM 130 to indicate to SAM 130 that SIP server 155 is attempting to locate SIP user agent 165. Once SIP user agent 165 is located, SIP server 155 issues a SIP INVITE message to SIP user agent 165 in step 418 to indicate to SIP user agent that it is being called from PBX 110. In step 418, SIP server 155 preferably notifies SIP user agent 165 of the INVITE by, for example, causing the user's telephone to ring. In step 418, SIP server 155 preferably also sends other data to SIP user agent 165, such as, for example, caller-ID data.

If SIP user agent 165 answers its INVITE of step 418 prior to telephone 145 answering its RING in step 416, SIP server 155 will respond to SAM 130 in step 430 that it received a SIP OK from SIP user agent 165 indicating that SIP user agent 165 is ready for voice conversation. Thereafter, SAM 130 will preferably stop or cancel its PDSV RING to telephone 145 in step 488, SAM 130 will preferably issue a SIP acknowledge (ACK) to SIP user agent 165 that SAM 130 is ready for voice conversation in step 440, and SAM 130 will preferably issue a PDSV answer (ANS) to PBX 110 that SAM 130 is ready for voice conversation in step 489. In step 441, 442, 443 data and/or voice ensues between SIP user agent 165 and telephone 175.

Consequently, PDSV voice is preferably received from telephone 175 at PBX 110, PBX 110 preferably issues the PDSV voice to SAM 130, SAM 130 preferably translates the PDSV voice to IP voice which is then transmitted to SIP User Agent 165. Likewise, SIP user agent 165 preferably transmits suitable IP voice to SAM 130, SAM 130 preferably translates the IP voice into a PDSV voice, SAM 130 preferably transmits the PDSV voice to PBX 110, and PBX 110 preferably transmits the PDSV voice to telephone 175. The transfer of information here preferably occurs in a manner that is transparent to the SIP user agent 165, PBX 110, and telephone 175. In addition, suitable digital encryption and signature techniques conventional in the art may be employed to assure authorized access to data, and to further ensure that the data are authentic.

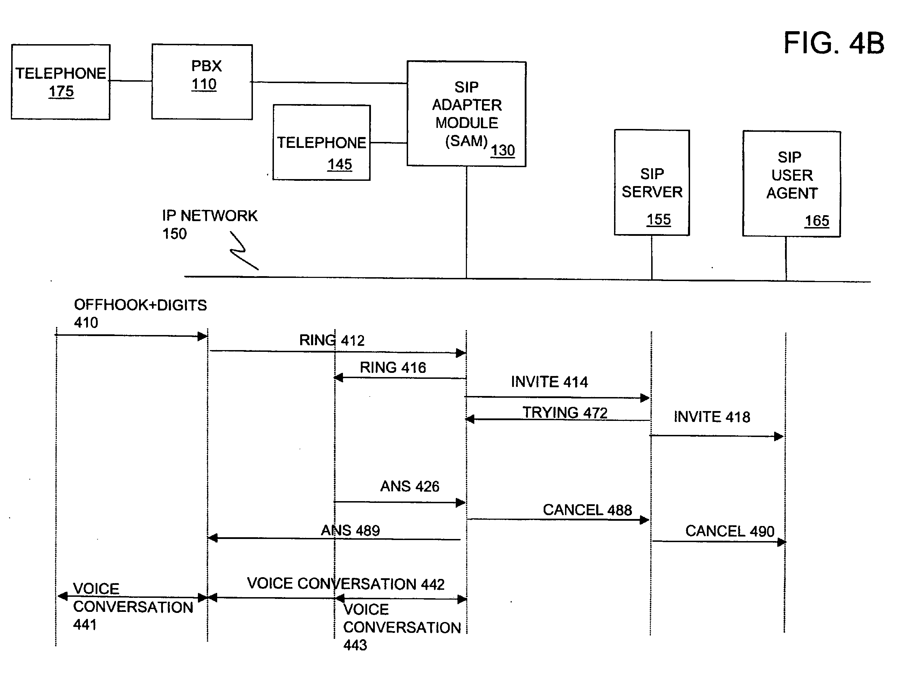

FIG. 4B is a functional block diagram of a process for a telephone set to answer a call that has been forked to it and a SIP user agent by using a SAM according to one embodiment of the invention. In step 410, PBX 110 receives a PDSV OFFHOOK+DIGITS code from telephone 175, preferably requesting to be connected to SIP user agent 165 or telephone 145, whichever one answers first. In step 412, PBX 110 preferably issues a PDSV RING message to SAM 130. SAM 130 preferably contains a standard dial-plan that determines whether to forward the message to SIP user agent 165 and/or telephone 145 and/or some other end-point and/or the like. In this case, SAM 130 preferably determines that the request is to attempt connect to both telephone 145 and SIP user agent 165 and to establish a voice connection to whichever answers first. In step 416, SAM 130 preferably issues a PDSV RING code to telephone 145. In step 414, which may occur concurrently with step 416, SAM 130 preferably issues a SIP INVITE message to SIP server 155 for SIP user agent 165. SIP server 155 uses the SIP INVITE information contained in the INVITE message of step 414 to determine a most correct address to which to route the connection request. The INVITE message of step 414 may, for example, include standard routing information in the "From:", "To:", "Contact:" and/or other fields within the INVITE message header. The INVITE of step 414 may also be forwarded through additional SIP Servers (not shown) or directly to telephone 165.

SIP server 155 accepts the SIP INVITE message of step 414 and then issues a SIP TRYING message to SAM 130 to indicate to SAM 130 that SIP server 155 is attempting to locate SIP user agent 165. Once SIP user agent 165 is located, SIP server 155 issues a SIP INVITE to SIP user agent 165 in step 418 to indicate to SIP user agent 165 that it is being called by PBX 110. In step 418, SIP server 155 preferably notifies SIP user agent 165 of the INVITE by, for example, causing the user's telephone to ring. In step 418, SIP server 155 preferably also sends other data to SIP user agent 165, such as, for example, caller-ID data.

This embodiment is similar to that of Figure 4A; however, in step 426, telephone 145 preferably answers its PDSV RING code of step 416 signifying that it is ready for voice conversation prior to SIP user agent 165 answering its SIP INVITE message of step 418. Consequently, in step 488, SAM 130 will preferably cancel its SIP INVITE of step 414 to SIP server 155 and, in step 490, SIP server 155 will preferably cancel its SIP INVITE of step 418 to SIP user agent 165. Thereafter, SAM 130 issues a PDSV answer (ANS) to PBX 110 that telephone 145 is ready for voice conversation and in step 441, 442, 443, voice conversation will ensue between telephone 175 and telephone 145.

Consequently, PDSV voice is preferably received from telephone 175 at PBX 110, PBX 110 preferably issues its received PDSV voice to SAM 130, and then SAM 130 preferably forwards PDSV voice to telephone 145. Likewise, telephone 145 preferably transmits a suitable PDSV voice to SAM 130, SAM 130 preferably issues PDSV voice to PBX 110 and PBX 110 preferably delivers its received voice code to telephone 175. The transfer of information here preferably occurs in a manner that is transparent to the telephone 145, PBX 110, and telephone 175. In addition, suitable digital encryption and signature techniques conventional in the art may be employed to assure authorized access to data, and to further ensure that the data are authentic.

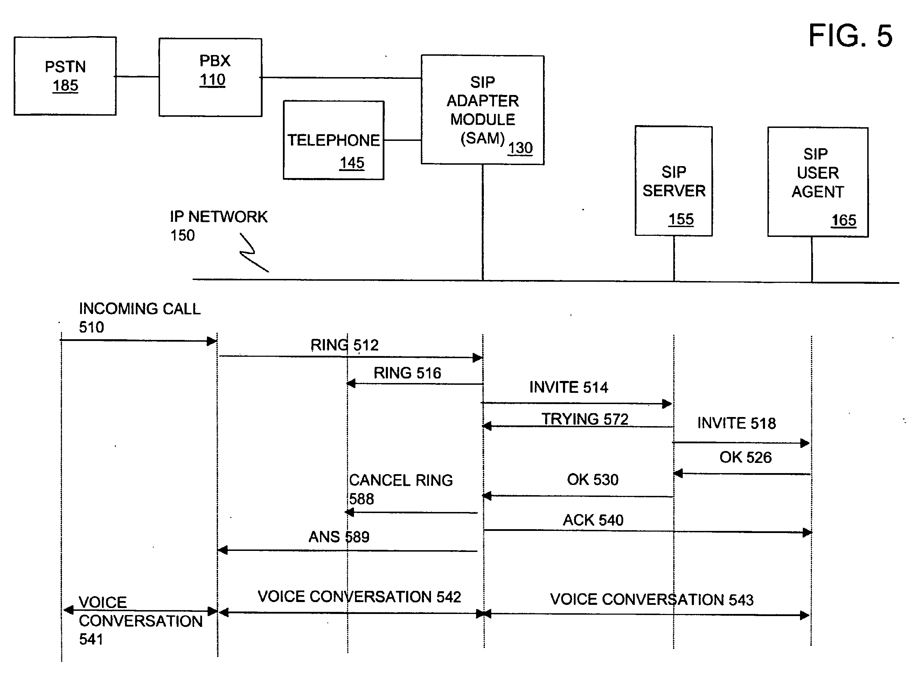

The forking process of FIG. 4A and 4B can also be performed when a call is received by the PBX 110 from a public switched telephone network PSTN 185. FIG. 5 is a functional block diagram of a process for an incoming call from a PSTN to be gatewayed to a SIP user agent by a SAM according to one embodiment of the invention. In step 510, PBX 110 receives an INCOMING CALL code from PSTN 185. In step 512, PBX 110 preferably issues a PDSV RING to SAM 130 indicating that an incoming call has been received by PBX 110 which is destined for the user associated with the telephone 145. SAM 130 preferably contains a standard dial-plan that determines whether to forward the message to SIP user agent 145 and/or some other end-point and/or the like. In this case, SAM 130 preferably forks a PDSV RING to telephone 145 in step 516 and a SIP INVITE message to SIP server 155 in step 514. SIP server 155 uses the SIP INVITE information contained in the INVITE message of step 514 to determine a most correct address to which to route the connection request. The SIP INVITE message of step 514 may, for example, include standard routing information in the "From:", "To:", "Contact:" and/or other fields within the INVITE message header. The INVITE of step 514 may also be forwarded through additional SIP Servers (not shown) or directly to telephone 165.

SIP server 155 accepts the SIP INVITE message from step 514 and then issues a SIP TRYING message to SAM 130 to indicate to SAM 130 that it is looking for SIP user agent 165. When SIP server 155 locates SIP user agent 165, SIP server 155 issues a SIP INVITE message to SIP user agent 165 in step 518. In step 518, SIP server 155 preferably notifies SIP user agent 165 of the INVITE by, for example, causing the user's telephone to ring. In step 518, SIP server 155 preferably also sends other data to telephone 165, such as, for example, caller-ID data.

In step 526, SIP user agent 165 responds to the SIP server INVITE of step 518 with a SIP OK message indicating to SIP server 155 that SIP user agent 165 is ready for voice conversation. SIP user agent 165 may indicate a SIP OK by, for example, answering the user's telephone. In step 530, SIP server 155 preferably indicates the receipt of the SIP OK from SIP user agent 165 in step 526 with a SIP OK to SAM 130 to indicate to SAM 130 that SIP user agent 165 is ready for voice conversation. Since SIP user agent 165 responded with a SIP OK in step 526 and SIP server 155 responded with an OK in step 530, SAM 130 cancels or stops its PDSV RING of step 516 in step 588. As such, in step 540, SAM 130 preferably SIP acknowledges (ACK) to SIP user agent 165 that it is ready for voice conversation and in step 589, SAM 130 PDSV answers (ANS) PBX 110 signifying that it is ready for voice conversation. Consequently, in step 541, 542, 543, data and/or voice ensues between PSTN 185 and SIP user agent 165.

Consequently, a voice signal is preferably received from PSTN 185 at PBX 110, PBX 110 preferably issues the PDSV voice to SAM 130, SAM 130 preferably translates the PDSV voice to IP voice, and SAM 130 then preferably transmits the IP voice to SIP user agent 165. Likewise, SIP user agent 165 preferably transmits suitable IP voice to SAM 130, SAM 130 preferably translates the IP voice into PDSV voice, SAM 130 preferably issues the PDSV voice to PBX 110 and PBX 110 preferably delivers a voice signal to PSTN 185. The transfer of information here preferably occurs in a manner that is transparent to PSTN 185 and SIP user agent 165. In addition, suitable digital encryption and signature techniques conventional in the art may be employed to assure authorized access to data, and to further ensure that the data are authentic.

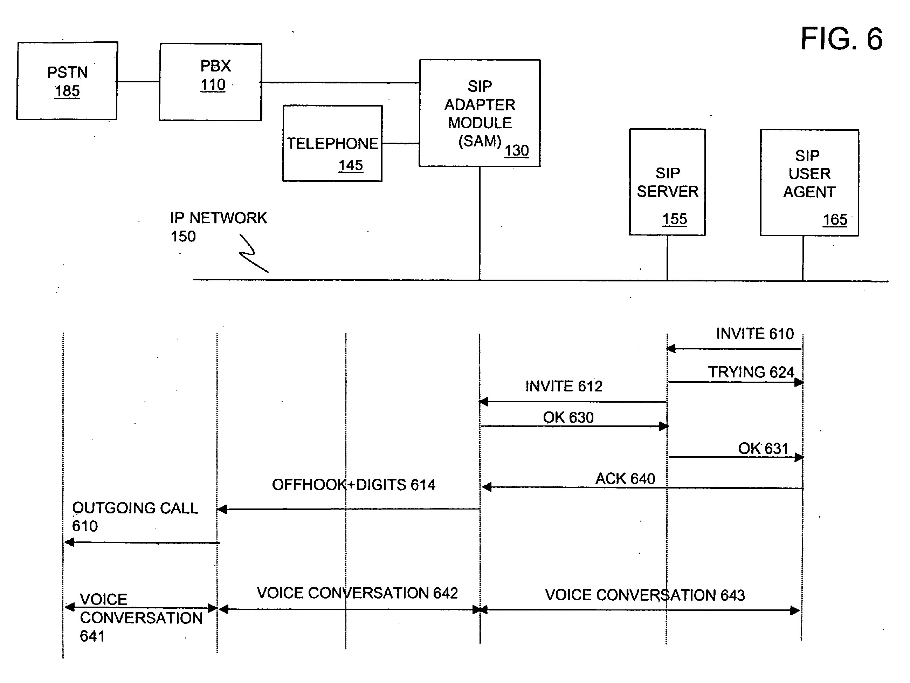

FIG. 6 is a functional block diagram of a process for a call from a SIP User Agent to be gatewayed as an outgoing call to a PSTN by a SAM according to one embodiment of the invention. In step 610, SIP server 155 receives a SIP signal from SIP user agent 165, preferably requesting to be connected to PSTN 185. SIP server 155 uses the INVITE information contained in the INVITE message of step 610 to determine a most correct address to which to route the connection request. The INVITE message of step 610 may, for example, include standard routing information in the "From:", "To:", "Contact:" and/or other fields within the INVITE message header.

SIP server 155 accepts the SIP INVITE message of step 610 and, in step 624, preferably transmits a SIP TRYING message to SIP user agent 165 to indicate that an action is being taken on behalf of the call. SIP server 155, preferably concurrently with the SIP TRYING message in step 624, issues a SIP INVITE message to SAM 130 in step 612. In step 630, SAM 130 preferably responds to the SIP server 155 INVITE message of step 612 with a SIP OK message and therefore SIP server 155 responds to SIP user agent 165 with an SIP OK message in step 631. To verify the connection between SIP user agent 165 and SAM 130, SIP user agent 165 sends an SIP acknowledgement (ACK) message to SAM 130 in step 640. Consequently, in step 614, SAM 130 issues an appropriate PDSV OFFHOOK+DIGITS code to PBX 110 to notify PBX 110 that a message has been received by SAM 130 from SIP user agent 165 and that PBX 110 should place a call through the PSTN 185 to the dialed number. In step 610, PBX 110 initiates an outgoing call to the PSTN, and once the outgoing call in step 610 has been received by PSTN 185, voice ensues between SIP user agent 165 and PSTN 185 in step 641, 642, 643.

Consequently, IP voice is preferably received from SIP user agent 165 at SAM 130, SAM 130 preferably translates the IP voice to a suitable PDSV voice, SAM 130 preferably sends the suitable PDSV voice to PBX 110, and PBX 110 preferably converts the PDSV voice to suitable voice for PSTN 185. Likewise, PSTN 185 preferably sends a voice signal to PBX 110, PBX 110 preferably converts the voice signal to suitable PDSV voice to SAM 130, SAM 130 preferably translates the PDSV voice to an IP voice, and SAM 130 preferably sends the IP voice to SIP user agent 165. The transfer of information here preferably occurs in a manner that is transparent to the SIP user agent 165, PBX 110, and PSTN 185. In addition, suitable digital encryption and signature techniques conventional in the art may be employed to assure authorized access to data, and to further ensure that the data are authentic.

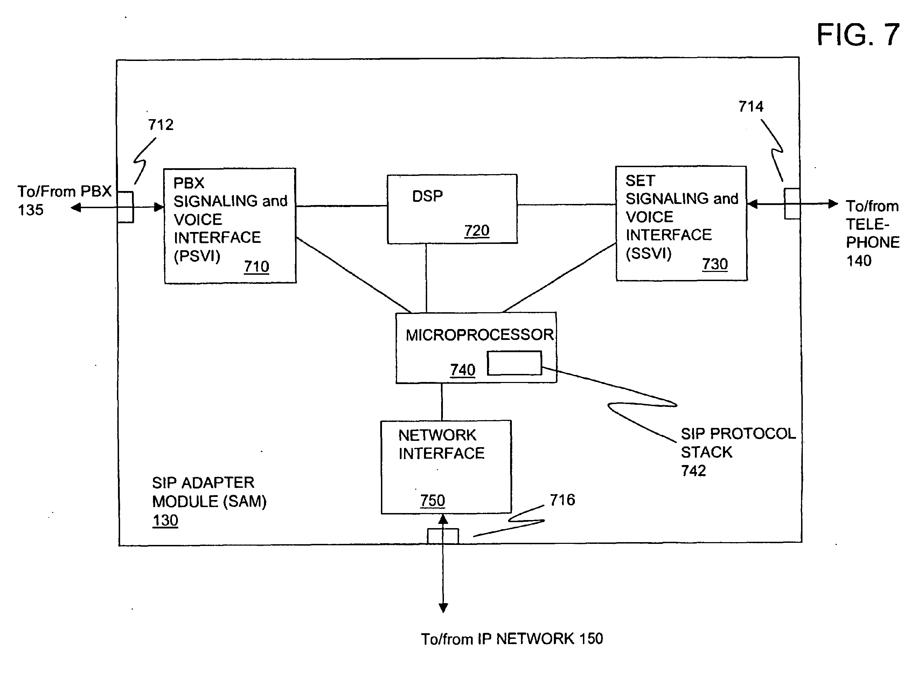

FIG. 7 is a functional block diagram of the SAM processing module. SAM 130 preferably includes a PBX signaling and voice interface (PSVI) 710, a Set Signaling and Voice Interface (SSVI) 730, digital signal processor (DSP) 720, Microprocessor 740, and Network Interface 750. The Microprocessor 740 preferably includes a SIP protocol stack 742, for translating PDSV signaling to/from SIP messages using traditional table lookup and/or algorithmic. The translation allows telephone 145 and PSTN 185 to take advantage of the various SIP services 156 that are provided by the SIP server 155 while also taking advantage of the full host of functionalities provided by PBX 110. The translation between a SIP messages and a PDSV signaling allows SIP user agent 165 access to the full range of functionalities provided by PBX 110, while also taking advantage of the various SIP services 156 provided by the SIP server 155.

In one embodiment, the set signaling and voice interface (SSVI) 730 preferably receives a PDSV signaling and voice from telephone 145 over communications port 714. SSVI 730 may consist of application-specific integrated circuits (ASICs) and/or software stacks within a suitable machine. The PDSV voice is transmitted to DSP 720 for preferably translating into an IP voice and/or the like. The PDSV signaling is preferably transmitted to Microprocessor 740 for processing. The SIP protocol stack 742 within the Microprocessor 740 is preferably invoked for translating the received PDSV signaling into SIP messages. Microprocessor 740 may also use other logic to translate between a PDSV and IP. The PDSV signaling may be translated into and included, for instance, within the body of a SIP invite message, request message, response message, informational message, instant message, and/or the like. A SIP message is then preferably transmitted via the Network Interface 750 to communications port 716 for transmission over the IP Network 150.

Network Interface 750 may further receive a SIP message on communications port 716 from IP network 150 for translation by Microprocessor 740. In this regard, the SIP Protocol Stack 742 preferably receives the SIP signal message. Upon translation into PDSV signaling, Microprocessor 740 forwards the communication to the appropriate destination. In this case, the signaling is preferably destined for telephone 145. Therefore Microprocessor 740 preferably forwards the PDSV signaling to SSVI 730 for transmitting to telephone 145 on communications port 714. SSVI 730 may consist of application-specific integrated circuits (ASICs) and/or software stacks within a suitable machine.

In another embodiment, the PBX signaling and voice interface (PSVI) 710 preferably receives a PDSV signaling and voice from PBX 110 over communications port 712. PSVI 710 may consist of application-specific integrated circuits (ASICs) and/or software stacks within a suitable machine. The PDSV voice is preferably transmitted to DSP 720 for translation into IP voice. The PDSV signaling is preferably transmitted to Microprocessor 740 for processing. The SIP protocol stack 742 within the Microprocessor 740 is preferably invoked for translating the received PDSV signaling into SIP messages. Microprocessor 740 may also use other logic to translate between PDSV and IP. The PDSV signaling may be translated into and included, for instance, within the body of a SIP invite message, request message, response message, informational message, instant message, and/or the like. A SIP message is then preferably transmitted via the Network Interface 750 to a communications port 716 for delivery over the IP Network 150.

The Network Interface 750 may further receive a SIP message on communications port 716 from IP Network 150 for translation by Microprocessor 740. In this regard, the SIP Protocol Stack 742 preferably receives the IP signal. Upon translation into a PDSV signaling, Microprocessor 740 forwards the PDSV signal to the appropriate destination. In this case, the code is preferably destined for PBX 110. Therefore Microprocessor 740 preferably forwards the PDSV signaling to PSVI 710 for transmitting to PBX 110 on communications port 712. PSVI 710 may consist of application-specific integrated circuits (ASICs) and/or software stacks within a suitable machine.

In another embodiment, the set signaling and voice interface (SSVI) 730 preferably receives a PDSV signaling or voice from telephone 145 over communications port 714. SSVI 730 may consist of application-specific integrated circuits (ASICs) and/or software stacks within a suitable machine. The PDSV voice is preferably transmitted to DSP 720 for translating into an IP voice. As such, the PDSV signaling is preferably transmitted to Microprocessor 740 for processing where the SIP protocol stack 742 within the Microprocessor 740 is preferably not invoked for translating the received PDSV signal since the communication is destined for PBX 110. The PDSV signal is preferably transmitted via the PSVI 710 to communications port 712 for delivery to PBX 110. PSVI 710 may consist of application-specific integrated circuits (ASICs) and/or software stacks within a suitable machine.

The PSVI 710 may further receive PDSV voice from PBX 110 over a communications port 712. PSVI 710 may consist of application-specific integrated circuits (ASICs) and/or software stacks within a suitable machine. The PDSV voice is preferably transmitted to DSP 720 for translation into IP voice. The PDSV signal is preferably transmitted to Microprocessor 740 for processing where the SIP protocol stack 742 within the Microprocessor 740 is preferably not invoked for translating the received PDSV signaling into SIP messages since the communication is destined for telephone 145. The PDSV signaling is then preferably transmitted via SSVI 730 to a communications port 714 for delivery to telephone 145. SSVI 730 may consist of application-specific integrated circuits (ASICs) and/or software stacks within a suitable machine.

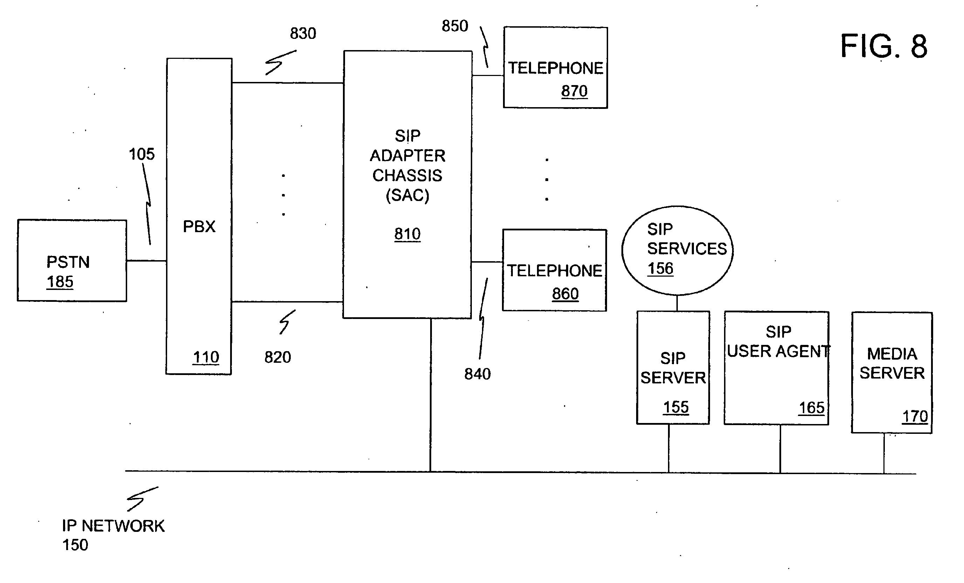

FIG. 8 is a functional block diagram of a SIP Adapter Chassis (SAC) according to one embodiment of the invention. In furtherance of Figure 1, in a configuration with a plurality of SAMs, the plurality of SAMs may be located within a SIP Adapter Chassis (SAC) 810. In Figure 8, SAC 810 contains a plurality of SAMs wherein resources within the SAC 810 are preferably shared to accomplish the above mentioned tasks for the various embodiments. SAC 810 has a plurality of inputs 820, 830 and a plurality of outputs 840, 850 leading to telephone 860, 870.

Although this invention has been described in certain specific embodiments, those skilled in the art will have no difficulty devising variations which in no way depart from the scope of the present invention. It is therefore to be understood that this invention may be practiced otherwise than is specifically described. For example, although the above embodiments have been described with respect to the SIP protocol, a person skilled in the art should recognize that any other TCP/IP application layer (Layer 4) control protocol known in the art may be used instead of SIP, such as, for example, H.323, MGCP, or the like. The described embodiments are therefore not limited to the use of SIP messages. Thus, the present embodiments of the invention should be considered in all respects as illustrative and not restrictive, the scope of the invention to be indicated by the appended claims and their equivalents rather than the foregoing description.

## Claims

1. Adapter (130) for a telephony communications network which comprises a telephony unit (145), the adapter (130) comprising a network interface (750) for transmitting an application layer control protocol message over a communications network (150), **characterized in that** said adapter (130) comprises: a signaling interface (730) configured to receive a telephony signaling code from said telephony unit (145), wherein the telephony signaling code is a private digital signaling and voice, PDSV, code to exchange signaling and voice; a processor (740) coupled to said network interface (750) and the signaling interface (730), the processor (740) configured to translate the telephony signaling code into the application layer control protocol message; wherein the processor (740) is further configured to translate an application layer control protocol message received by the network interface (750) into a telephony signaling code for forwarding to the telephony unit (145) over the signaling interface (730) .

2. The adapter (130) according to claim 1, **characterized by** a second signaling interface (710) configured to receive a telephony signaling code from a PBX (110), wherein said processor (740) is coupled to the second signaling interface (710), the processor (740) configured to translate the telephony signaling code of the PBX (110) into an application layer control protocol message and to provide said network interface (750) coupled to the processor (740) with the application layer control protocol message for transmitting the application layer control protocol message over a communications network (150).

3. The adapter (130) of claim 2, wherein the processor (740) is further configured to translate an application layer control protocol message received by the network interface (750) into a telephony signaling code for forwarding to the PBX (110) over the second signaling interface (710).

4. The adapter (130) according to one of the preceding claims, **characterized by** a digital signal processor, DSP, (720) which is configured to translate voice data received over said signaling interface (710, 730) to IP voice data for transmitting the translated voice data over said communications network (150) and/or to translate IP voice data received from said communications network (150) to voice data suitable for transmission over said signaling interface (710, 730).

5. The adapter (130) according to one of the claims 2 to 4, wherein said adapter (130) is configured to forward telephony signaling code and/or voice data from said PBX (110) to said telephony unit (145) and vice versa.

6. The adapter (130) according to one of the preceding claims, wherein the application layer control protocol message is a Session Initiation Protocol, SIP, message and/or a Real-Time Transport Protocol, RTP, for media exchange.

7. The adapter (130) according to one of the preceding claims, wherein the telephony unit is a digital telephone.

8. The adapter (130) according to one of the preceding claims, wherein the communications network (150) is an IP network.

9. SIP adapter chassis (810) for a telephony communications network, comprising a plurality of adapters (130) according to one of the preceding claims.

10. SIP adapter chassis (810) according to claim 9, **characterized by** being coupled to a PBX (110) and/or a public switched telephone network, PSTN, (185) via said PBX (110), one or more telephones (860, .., 870), and to an IP network (150).

11. Telephony communications network comprising one or more telephony units (145, 160, 175) and one or more adapters (130) or SIP adapter chassis (810) according to one of the preceding claims.

12. Method of operating an adapter (130) for a telephony communications network which comprises a first telephony unit (145, 175) and/or a PBX (110), the method comprising:
receiving a telephony signaling code from said telephony unit (145, 175) and/or said PBX (110) at a signaling interface (730, 710) of said adapter (130), wherein the telephony signaling code is a private digital signaling and voice, PDSV, code to exchange signaling and voice;
translating the telephony signaling code into an application layer control protocol message by means of a processor (740) coupled to the signaling interface (730, 710); transmitting the application layer control protocol message over a communications network (150) by means of a network interface (750) coupled to the processor (740), translating an application layer control protocol message received by the network interface (750) into a telephony signaling code for forwarding to the telephony unit (145) over the signaling interface (730).

13. Method according to claim 12, **characterized in that** a second telephony unit (165) subscribes with said adapter (130) for receiving the application layer control protocol message.

14. Method according to one of the claims 12 to 13, **characterized in that** the adapter (130) allows the first telephony unit (145) access to private branch exchange functionality associated with the telephony signaling code.

15. Method according to one of the claims 13 to 14, **characterized by** routing the application layer control protocol message to the second telephony unit (165) via a server (155).

16. Method according to claim 15, **characterized in that** the server (155) determines the second telephony unit. (165) for receiving the application layer control protocol message and transmits the application layer control protocol message to the second telephony unit (165).

17. Method according to one of the claims 15 to 16, **characterized in that** said server (155) provides a third party service for the first telephony unit (145) and/or the second telephony unit (165).

18. Method according to one of the claims 12 to 17, wherein the application layer control protocol message is a Session Initiation Protocol, SIP, message and/or a Real-Time Transport Protocol, RTP, for media exchange.

19. Method according to one of the claims 12 to 18, wherein the first telephony unit (145) is a digital telephone.

20. Method according to one of the claims 12 to 19, wherein the second telephony unit (165) is a SIP user agent.

21. Method according to one of the claims 12 to 20, wherein the adapter (130) is an adapter (130) according to one of the claims 1 to 8, in particular a SIP adapter (130).

22. Method according to one of the claims 12 to 21, wherein the adapter (130) allows the first telephony unit (145) access to SIP server functionality associated with the telephony signaling code.

23. Method according to claim 12, **characterized in that** said PBX (110) receives said telephony signaling code from said telephony unit (175) as a first telephony signaling code and converts said received first telephony signaling code to a second telephony signaling code prior to forwarding said second telephony signaling code to said signaling interface (710) of said adapter (130).

24. Method according to claim 23, wherein a second telephony unit (145) coupled to the adapter (130) receives the second telephony signaling code; a server (155) coupled to the communications network (150) routes the application layer control protocol message and communicates with the adapter (130); and a third telephony unit (165) coupled to the server (155) receives the application layer control protocol message.

25. Method according to claim 24, wherein the adapter (130) cancels the second telephony signaling code to the second telephony unit (145) and maintains the message to the third telephony unit (165) if the third telephony unit (165) responds to the application layer control protocol message before the second telephony unit (145) responds to the second telephony signaling code.

26. Method according to claim 25, wherein the first telephony unit (175) has access to private branch exchange functionality associated with the telephony signaling code.

27. Method according to claim 24, wherein the adapter (130) cancels the application layer protocol message to the third telephony unit (165) and maintains the second telephony signaling code to the second telephony unit (145) if the second telephony unit (145) responds to the second telephony signaling code before the third telephony unit (165) responds to the application layer control protocol message.

28. Method according to claim 27, wherein the first telephony unit (175) has access to session initiation protocol functionality associated with the application layer control protocol message.

29. Method according to claim 24, wherein the server (155) determines the third telephony unit (165) for receiving the application layer control protocol message and transmits the application layer control protocol message to the third telephony unit (165).

30. Method according to claim 24, **characterized in that** said server (155) provides a third party service for the first telephony unit (175) and/or the third telephony unit (165).

31. Method according to claim 24, wherein the application layer control protocol message is a Session Initiation Protocol, SIP, message and/or a Real-Time Transport Protocol, RTP, for media exchange.

32. Method according to claim 24, wherein the third telephony unit (165) is a SIP user agent.

33. Method according to claim 24, wherein the first telephony unit (175) and/or the second telephony unit (145) is a digital telephone.

34. Method according to claim 24, wherein the first telephony unit (175) is a public switched telephone network, PSTN.

35. Method according to claim 24, wherein the adapter (130) is an adapter (130) according to one of the claims 1 to 8, in particular a SIP adapter (130).

36. Method according to claim 24, wherein the adapter (130) allows the first telephony unit (175) access to SIP server functionality associated with the telephony signaling code.

37. Method according to claim 23, further comprising: a second telephony unit (145) receiving the second telephony signaling code; and a third telephony unit (165) receiving the application layer control protocol message, wherein said third telephony unit (165) subscribes with the adapter (130) for receiving the application layer control protocol message.

38. Method of operating an adapter (130) for a telephony communications network which comprises a first telephony unit (165), the method comprising: receiving an application layer control protocol message transmitted by said first telephony unit (165) at a communications interface (750) of said adapter (130); translating the application layer control protocol message into a telephony signaling code by means of a processor (740) coupled to said communications interface (750), wherein the telephony signaling code is a private digital signaling and voice, PDSV, code to exchange signaling and voice; receiving said telephony signaling code at a second telephony unit (145) coupled to said adapter (130).

39. The method of claim 38, wherein the adapter (130) allows the first telephony unit (165) access to private branch exchange functionality associated with the application layer control protocol message.

40. The method of claim 38 further comprising routing the application layer control protocol message transmitted by the first telephony unit (165) via a server (155).

41. The method of claim 40, wherein the server (155) allows the first telephony unit (165) access to SIP server functionality associated with the application layer control protocol message.

42. The method of claim 40, wherein the server (155) provides a third party service for the first telephony unit (165) and/or for the second telephony unit (145).

43. The method of claim 39, wherein the application layer control protocol message is a Session Initiation Protocol (SIP) message and/or a Real-Time Transport Protocol (RTP) for media exchange.

44. The method of claim 38, wherein the first telephony unit (165) is a SIP user agent.

45. The method of claim 38, wherein the second telephony unit (145) is a digital telephone.

46. The method of claim 38, wherein: a server (155) coupled to the communications interface receives a first application layer control protocol message and generates a second application layer control protocol message to the first telephony unit (165) and a third application layer control protocol message; and the adapter (130) receives the third application layer control protocol message, generates a fourth application layer protocol message to the first telephony unit (165) wherein the first telephony unit (165) generates a fifth application layer control protocol message to the adapter (130), and wherein the adapter (130) translates the fifth application layer control protocol message into a first telephony signaling code.

47. The method of claim 46, wherein a PBX (110) coupled to the adapter (130) converts the first telephony signaling code into a second telephony signaling code; and a second telephony unit (185) coupled to the PBX (110) receives the second telephony signaling code.

48. The method of claim 47, wherein the first telephony unit (165) has access to session initiation protocol, SIP, functionality associated with the first application layer control protocol message.

49. The method of claim 48, wherein the server (155) provides a third party service for the first telephony unit (165).

50. The method of claim 46, wherein the application layer control protocol message is a Session Initiation Protocol, SIP, message for media exchange and/or a Real-Time Transport Protocol, RTP, for media exchange.

51. The method of claim 46, wherein the telephony signaling code is a private digital signaling and voice, PDSV, code to exchange signaling and voice.

52. The method of claim 46, wherein the first telephony unit (165) is a SIP user agent.

53. The method of claim 47, wherein the second telephony unit (185) is a public switched telephone network, PSTN.

54. The method of claim 46, wherein the adapter (130) is an adapter (130) according to one of the claims 1 to 8, in particular a SIP adapter (130).

## Patentansprüche

1. Adapter (130) für ein Fernsprechkommunikationsnetzwerk, welches eine Fernsprecheinheit (145) umfasst, wobei der Adapter (130) eine Netzwerkschnittstelle (750) zum Übertragen einer Steuerungsprotokollnachricht der Anwendungsschicht über ein Kommunikationsnetzwerk (150) umfasst, **dadurch gekennzeichnet, dass** der besagte Adapter (130) umfasst: Eine Signalisierungsschnittstelle (730), welche für den Empfang eines Fernsprechsignalisierungscodes von der besagten Fernsprecheinheit (145) konfiguriert ist, wobei der Fernsprechsignalisierungscode ein Code für die private digitale Signalisierung und Sprache, PDSV, für den Austausch von Signalisierung und Sprache ist; einen Prozessor (740), welcher an die besagte Netzwerkschnittstelle (750) und an die Signalisierungsschnittstelle (730) gekoppelt ist, wobei der Prozessor (740) für die Übersetzung des Fernsprechsignalisierungscodes in die Steuerungsprotokollnachricht der Anwendungsschicht konfiguriert ist; wobei der Prozessor (740) weiterhin für die Übersetzung einer an der Netzwerkschnittstelle (750) empfangenen Steuerungsprotokollnachricht der Anwendungsschicht in einen Fernsprechsignalisierungscode zum Weiterleiten an die Fernsprecheinheit (145) über die Signalisierungsschnittstelle (730) konfiguriert ist.

2. Der Adapter (130) nach Anspruch 1, **gekennzeichnet durch** eine zweite Signalisierungsschnittstelle (710), welche dazu ausgelegt ist, einen Fernsprechsignalisierungscode von einer PBX (110) zu empfangen, wobei der besagte Prozessor (740) an die zweite Signalisierungsschnittstelle (710) gekoppelt ist, wobei der Prozessor (740) dazu konfiguriert ist, den Fernsprechsignalisierungscode der PBX (110) in eine Steuerungsprotokollnachricht der Anwendungsschicht zu übersetzen und die Steuerungsprotokollnachricht der Anwendungsschicht an die besagte Netzwerkschnittstelle (750), welche an den Prozessor (740) gekoppelt ist, zu senden, um die Steuerungsprotokollnachricht der Anwendungsschicht über ein Kommunikationsnetzwerk (150) zu übertragen.

3. Der Adapter (130) nach Anspruch 2, wobei der Prozessor (740) weiterhin dazu konfiguriert ist, eine an der Netzwerkschnittstelle (750) empfangene Steuerungsprotokollnachricht der Anwendungsschicht in einen Fernsprechsignalisierungscode für das Weiterleiten an die PBX (110) über die zweite Signalisierungsschnittstelle (710) zu übersetzen.

4. Der Adapter (130) nach einem der vorstehenden Ansprüche, **gekennzeichnet durch** einen digitalen Signalprozessor, DSP, (720) welcher dazu konfiguriert ist, über die besagte Signalisierungsschnittstelle (710, 730) empfangene Sprachdaten in IP-Sprachdaten zu übersetzen, um die übersetzten Sprachdaten über das besagte Kommunikationsnetzwerk (150) zu übertragen, und/oder die von dem besagten Kommunikationsnetzwerk (150) empfangenen IP-Sprachdaten in Sprachdaten zu übersetzen, welche für die Übertragung über die besagte Signalisierungsschnittstelle (710, 730) geeignet sind.

5. Der Adapter (130) nach einem der Ansprüche 2 bis 4, wobei der besagte Adapter (130) dazu konfiguriert ist, den Fernsprechsignalisierungscode und/oder die Sprachdaten von der besagten PBX (110) and die besagte Fernsprecheinheit (145) und umgekehrt weiterzuleiten.

6. Der Adapter (130) nach einem der vorstehenden Ansprüche, wobei die Steuerungsprotokollnachricht der Anwendungsschicht eine Sitzungsaufbauprotokoll-, SIP, Nachricht und/oder ein Echtzeittransportprotokoll, RTP, für den Medienaustausch ist.

7. Der Adapter (130) nach einem der vorstehenden Ansprüche, wobei die Fernsprecheinheit ein digitaler Telefonapparat ist.

8. Der Adapter (130) nach einem der vorstehenden Ansprüche, wobei das Kommunikationsnetzwerk (150) ein IP-Netzwerk ist.

9. SIP-Adapterchassis (810) für ein Fernsprechkommunikationsnetzwerk, umfassend eine Mehrzahl von Adaptern (130) nach einem der vorstehenden Ansprüche.

10. SIP-Adapterchassis (810) nach Anspruch 9, **dadurch gekennzeichnet, dass** es an eine PBX (110) und/oder über die besagte PBX (110) an ein öffentliches vermitteltes Telefonnetzwerk, PSTN, (185), ein oder mehr Telefonapparate (860, .., 870), und an ein IP-Netzwerk (150) gekoppelt ist.

11. Fernsprechkommunikationsnetzwerk mit einer oder mehreren Fernsprecheinheiten (145, 160, 175) und einem oder mehreren Adaptern (130) oder SIP-Adapterchassis (810) nach einem der vorstehenden Ansprüche.

12. Verfahren zum Betreiben eines Adapters (130) für ein Fernsprechkommunikationsnetzwerk, welches eine erste Fernsprecheinheit (145, 175) und oder eine PBX (110) umfasst, wobei das Verfahren umfasst: Empfangen eines Fernsprechsignalisierungscodes von der besagten Fernsprecheinheit (145, 175) und/oder der besagten PBX (110) an einer Signalisierungsschnittstelle (730, 710) des besagten Adapters (130), wobei der Fernsprechsignalisierungscode ein Code für die private digitale Signalisierung und Sprache, PDSV, für den Austausch von Signalisierung und Sprache ist; Übersetzen des Fernsprechsignalisierungscodes in eine Steuerungsprotokollnachricht der Anwendungsschicht anhand eines an die Signalisierungsschnittstelle (730, 710) gekoppelten Prozessors (740); Übertragen der Steuerungsprotokollnachricht der Anwendungsschicht über ein Kommunikationsnetzwerk (150) anhand einer an den Prozessor (740) gekoppelten Netzwerkschnittstelle (750); Übersetzen einer an der Netzwerkschnittstelle (750) empfangenen Steuerungsprotokollnachricht der Anwendungsschicht in einen Fernsprechsignalisierungscode zum Weiterleiten an die Fernsprecheinheit (145) über die Signalisierungsschnittstelle (730).

13. Verfahren nach Anspruch 12, **dadurch gekennzeichnet, dass** sich eine zweite Fernsprecheinheit (165) bei dem besagten Adapter (130) abonniert, um die Steuerungsprotokollnachricht der Anwendungsschicht zu empfangen.

14. Verfahren nach einem der Ansprüche 12 bis 13, **dadurch gekennzeichnet, dass** der Adapter (130) es der ersten Fernsprecheinheit (145) ermöglicht, auf mit dem Fernsprechsignalisierungscode assoziierte Fernsprechnebenstellenfunktionalitäten zuzugreifen.

15. Verfahren nach einem der Ansprüche 13 bis 14, **gekennzeichnet durch** das Routen der Steuerungsprotokollnachricht der Anwendungsschicht an die zweite Fernsprecheinheit (165) über einen Server (155).

16. Verfahren nach Anspruch 15, **dadurch gekennzeichnet, dass** der Server (155) die zweite Fernsprecheinheit (165) für den Empfang der Steuerungsprotokollnachricht der Anwendungsschicht bestimmt und die Steuerungsprotokollnachricht der Anwendungsschicht an die zweite Fernsprecheinheit (165) überträgt.

17. Verfahren nach einem der Ansprüche 15 bis 16, **dadurch gekennzeichnet, dass** der besagte Server (155) einen Dienst von Drittanbietern für die erste Fernsprecheinheit (145) und/oder die zweite Fernsprecheinheit (165) bereitstellt.

18. Verfahren nach einem der Ansprüche 12 bis 17, wobei die Steuerungsprotokollnachricht der Anwendungsschicht eine Sitzungsaufbauprotokoll-, SIP, Nachricht und/oder ein Echtzeittransportprotokoll, RTP, für den Medienaustausch ist.

19. Verfahren nach einem der Ansprüche 12 bis 18, wobei die erste Fernsprecheinheit (145) ein digitaler Telefonapparat ist.

20. Verfahren nach einem der Ansprüche 12 bis 19, wobei die zweite Fernsprecheinheit (165) ein SIP-Benutzeragent ist.

21. Verfahren nach einem der Ansprüche 12 bis 20, wobei der Adapter (130) ein Adapter (130) nach einem der Ansprüche 1 bis 8, insbesondere ein SIP-Adapter (130), ist.

22. Verfahren nach einem der Ansprüche 12 bis 21, wobei der Adapter (130) es der ersten Fernsprecheinheit (145) ermöglicht, auf mit dem Telefonsignalisierungscode assoziierte SIP-Server-Funktionalitäten zuzugreifen.

23. Verfahren nach Anspruch 12, **dadurch gekennzeichnet, dass** die besagte PBX (110) den besagten Fernsprechsignalisierungscode von der besagten Fernsprecheinheit (175) als einen ersten Fernsprechsignalisierungscode empfängt und den besagten ersten Fernsprechsignalisierungscode in einen zweiten Fernsprechsignalisierungscode umwandelt, bevor der besagte zweite Fernsprechsignalisierungscode an die besagte Signalisierungsschnittstelle (710) des besagten Adapters (130) weitergeleitet wird.

24. Verfahren nach Anspruch 23, wobei eine an den Adapter (130) gekoppelte zweite Fernsprecheinheit (145) den zweiten Fernsprechsignalisierungscode empfängt; wobei ein an das Kommunikationsnetzwerk (150) gekoppelter Server (155) die Steuerungsprotokollnachricht der Anwendungsschicht routet und mit dem Adapter (130) kommuniziert; und wobei eine an den Server (155) gekoppelte dritte Fernsprecheinheit (165) die Steuerungsprotokollnachricht der Anwendungsschicht empfängt.

25. Verfahren nach Anspruch 24, wobei der Adapter (130) den zweiten Fernsprechsignalisierungscode an die zweite Fernsprecheinheit (145) annulliert und die Nachricht an die dritte Fernsprecheinheit (165) beibehält, wenn die dritte Fernsprecheinheit (165) auf die Steuerungsprotokollnachricht der Anwendungsschicht antwortet, bevor die zweite Fernsprecheinheit (145) auf den zweiten Fernsprechsignalisierungscode antwortet.

26. Verfahren nach Anspruch 25, wobei die erste Fernsprecheinheit (175) Zugriff auf mit dem Fernsprechsignalisierungscode assoziierte Fernsprechnebenstellenfunktionalitäten hat.

27. Verfahren nach Anspruch 24, wobei der Adapter (130) die Steuerungsprotokollnachricht der Anwendungsschicht an die dritte Fernsprecheinheit (165) annulliert und den zweiten Fernsprechsignalisierungscode an die zweite Fernsprecheinheit (145) beibehält, wenn die zweite Fernsprecheinheit (145) auf den zweiten Fernsprechsignalisierungscode antwortet, bevor die dritte Fernsprecheinheit (165) auf die Steuerungsprotokollnachricht der Anwendungsschicht antwortet.

28. Verfahren nach Anspruch 27, wobei die erste Fernsprecheinheit (175) Zugriff auf mit der Steuerungsprotokollnachricht der Anwendungsschicht assoziierte Sitzungsaufbauprotokoll-Funktionalität hat.

29. Verfahren nach Anspruch 24, wobei der Server (155) die dritte Fernsprecheinheit (165) für den Empfang der Steuerungsprotokollnachricht der Anwendungsschicht bestimmt und die Steuerungsprotokollnachricht der Anwendungsschicht an die dritte Fernsprecheinheit (165) überträgt.

30. Verfahren nach Anspruch 24, **dadurch gekennzeichnet, dass** der besagte Server (155) einen Dienst von Drittanbietern für die erste Fernsprecheinheit (175) und/oder die dritte Fernsprecheinheit (165) bereitstellt.

31. Verfahren nach Anspruch 24, wobei die Steuerungsprotokollnachricht der Anwendungsschicht eine Sitzungsaufbauprotokoll-, SIP, Nachricht und/oder ein Echtzeittransportprotokoll, RTP, für den Medienaustausch ist.

32. Verfahren nach Anspruch 24, wobei die dritte Fernsprecheinheit (165) ein SIP-Benutzeragent ist.

33. Verfahren nach Anspruch 24, wobei die erste Fernsprecheinheit (175) und/oder die zweite Fernsprecheinheit (145) ein digitaler Telefonapparat ist.

34. Verfahren nach Anspruch 24, wobei die erste Fernsprecheinheit (175) ein öffentliches vermitteltes Telefonnetzwerk, PSTN, ist.

35. Verfahren nach Anspruch 24, wobei der Adapter (130) ein Adapter (130) gemäß einem der Ansprüche 1 bis 8, insbesondere ein SIP-Adapter (130), ist.

36. Verfahren nach Anspruch 24, wobei der Adapter (130) es der ersten Fernsprecheinheit (175) ermöglicht, auf mit dem Fernsprechsignalisierungscode assoziierte SIP-Server-Funktionalitäten zuzugreifen.

37. Verfahren nach Anspruch 23, weiterhin umfassend: Eine zweite Fernsprecheinheit (145), welche den zweiten Fernsprechsignalisierungscode empfängt; und eine dritte Fernsprecheinheit (165), welche die Steuerungsprotokollnachricht der Anwendungsschicht empfängt, wobei sich die besagte dritte Fernsprecheinheit (165) bei dem Adapter (130) abonniert, um die Steuerungsprotokollnachricht der Anwendungsschicht zu empfangen.

38. Verfahren zum Betreiben eines Adapters (130) für ein Fernsprechkommunikationsnetzwerk, welches eine erste Fernsprecheinheit (165) umfasst, wobei das Verfahren umfasst: Empfangen einer von der besagten ersten Fernsprecheinheit (165) übertragenen Steuerungsprotokollnachricht der Anwendungsschicht an einer Kommunikationsschnittstelle (750) des besagten Adapters (130); Übersetzen der Steuerungsprotokollnachricht der Anwendungsschicht in einen Fernsprechsignalisierungscode anhand eines an die besagte Kommunikationsschnittstelle (750) gekoppelten Prozessors (740), wobei der Fernsprechsignalisierungscode ein Code für die private digitale Signalisierung und Sprache, PDSV, für den Austausch von Signalisierung und Sprache ist; Empfangen des besagten Fernsprechsignalisierungscodes an einer an den besagten Adapter (130) gekoppelten zweiten Fernsprecheinheit (145).

39. Das Verfahren nach Anspruch 38, wobei der Adapter (130) es der ersten Fernsprecheinheit (165) ermöglicht, auf mit der Steuerungsprotokollnachricht der Anwendungsschicht assoziierte Fernsprechnebenstellenfunktionalitäten zuzugreifen.

40. Das Verfahren nach Anspruch 38, weiterhin umfassend das Routen der von der ersten Fernsprecheinheit (165) übertragenen Steuerungsprotokollnachricht der Anwendungsschicht über einen Server (155).

41. Das Verfahren nach Anspruch 40, wobei der Server (155) es der ersten Fernsprecheinheit (165) ermöglicht, auf mit der Steuerungsprotokollnachricht der Anwendungsschicht assoziierte SIP-Server-Funktionalitäten zuzugreifen.

42. Das Verfahren nach Anspruch 40, wobei der Server (155) einen Dienst von Drittanbietern für die erste Fernsprecheinheit (165) und/oder für die zweite Fernsprecheinheit (145) bereitstellt.

43. Das Verfahren nach Anspruch 39, wobei die Steuerungsprotokollnachricht der Anwendungsschicht eine Sitzungsaufbauprotokoll-, SIP, Nachricht und/oder ein Echtzeittransportprotokoll, RTP, für den Medienaustausch ist.

44. Das Verfahren nach Anspruch 38, wobei die erste Fernsprecheinheit (165) ein SIP-Benutzeragent ist.

45. Das Verfahren nach Anspruch 38, wobei die zweite Fernsprecheinheit (145) ein digitaler Telefonapparat ist.

46. Das Verfahren nach Anspruch 38, wobei: Ein an die Kommunikationsschnittstelle gekoppelter Server (155) eine erste Steuerungsprotokollnachricht der Anwendungsschicht empfängt und eine zweite Steuerungsprotokollnachricht der Anwendungsschicht an die erste Fernsprecheinheit (165) und eine dritte Steuerungsprotokollnachricht der Anwendungsschicht erzeugt; und wobei der Adapter (130) die dritte Steuerungsprotokollnachricht der Anwendungsschicht empfängt und eine vierte Steuerungsprotokollnachricht der Anwendungsschicht an die erste Fernsprecheinheit (165) erzeugt, wobei die erste Fernsprecheinheit (165) eine fünfte Steuerungsprotokollnachricht der Anwendungsschicht an den Adapter (130) erzeugt, und wobei der Adapter (130) die fünfte Steuerungsprotokollnachricht der Anwendungsschicht in einen ersten Fernsprechsignalisierungscode übersetzt.

47. Das Verfahren nach Anspruch 46, wobei eine an den Adapter (130) gekoppelte PBX (110) den ersten Fernsprechsignalisierungscode in einen zweiten Fernsprechsignalisierungscode umwandelt; und wobei eine an die PBX (110) gekoppelte zweite Fernsprecheinheit (185) den zweiten Fernsprechsignalisierungscode empfängt.

48. Das Verfahren nach Anspruch 47, wobei die erste Fernsprecheinheit (165) Zugriff auf mit der ersten Steuerungsprotokollnachricht der Anwendungsschicht assoziierte Sitzungsaufbauprotokoll-, SIP, Funktionalitäten hat.

49. Das Verfahren nach Anspruch 48, wobei der Server (155) einen Dienst von Drittanbietern für die erste Fernsprecheinheit (165) bereitstellt.

50. Das Verfahren nach Anspruch 46, wobei die Steuerungsprotokollnachricht der Anwendungsschicht eine Sitzungsaufbauprotokoll-, SIP, Nachricht für den Medienaustausch und/oder ein Echtzeittransporrprotokoll, RTP, für den Medienaustausch ist.

51. Das Verfahren nach Anspruch 46, wobei der Fernsprechsignalisierungscode ein Code für die private digitale Signalisierung und Sprache, PDSV, für den Austausch von Signalisierung und Sprache ist.

52. Das Verfahren nach Anspruch 46, wobei die erste Fernsprecheinheit (165) ein SIP-Benutzeragent ist.

53. Das Verfahren nach Anspruch 47, wobei die zweite Fernsprecheinheit (185) ein öffentliches vermitteltes Telefonnetzwerk, PSTN, ist.

54. Das Verfahren nach Anspruch 46, wobei der Adapter (130) ein Adapter (130) gemäß einem der Ansprüche 1 bis 8, insbesondere ein SIP-Adapter (130) ist.

## Revendications

1. Adaptateur (130) pour un réseau de communications téléphonique qui comprend une unité de téléphonie (145), l'adaptateur (130) comprenant une interface de réseau (750) pour émettre un message de protocole de commande de couche d'application par le biais d'un réseau de communications (150), **caractérisé en ce que** ledit adaptateur (130) comprend : une interface de signalisation (730) configurée pour recevoir un code de signalisation de téléphonie de la part de ladite unité de téléphonie (145), le code de signalisation de téléphonie étant un code de signalisation et vocal numérique privé, PDSV, pour échanger la signalisation et la voix ; un processeur (740) connecté à ladite interface de réseau (750) et à l'interface de signalisation (730), le processeur (740) étant configuré pour convertir le code de signalisation de téléphonie en message de protocole de commande de couche d'application ; le processeur (740) étant en outre configuré pour convertir un message de protocole de commande de couche d'application reçu par l'interface de réseau (750) en un code de signalisation de téléphonie pour le transmettre à l'unité de téléphonie (145) par le biais de l'interface de signalisation (730).

2. Adaptateur (130) selon la revendication 1, **caractérisé par** une deuxième interface de signalisation (710) configurée pour recevoir un code de signalisation de téléphonie de la part d'un autocommutateur privé (110), ledit processeur (740) étant connecté à la deuxième interface de signalisation (710), le processeur (740) étant configuré pour convertir le code de signalisation de téléphonie de l'autocommutateur privé (110) en un message de protocole de commande de couche d'application et pour délivrer à ladite interface de réseau (750) connectée au processeur (740) le message de protocole de commande de couche d'application afin de transmettre le message de protocole de commande de couche d'application par le biais d'un réseau de communications (150).

3. Adaptateur (130) selon la revendication 2, le processeur (740) étant en outre configuré pour convertir un message de protocole de commande de couche d'application reçu par l'interface de réseau (750) en un code de signalisation de téléphonie pour le transmettre à l'autocommutateur privé (110) par le biais de la deuxième interface de signalisation (710).

4. Adaptateur (130) selon l'une des revendications précédentes, **caractérisé par** un processeur numérique de signal, DSP, (720) qui est configuré pour convertir les données vocales reçues par le biais de ladite interface de signalisation (710, 730) en données vocales IP pour transmettre les données vocales converties par le biais dudit réseau de communications (150) et/ou pour convertir les données vocales IP reçues de la part dudit réseau de communications (150) en données vocales adaptées pour leur transmission par le biais de ladite interface de signalisation (710, 730).

5. Adaptateur (130) selon l'une des revendications 2 à 4, ledit adaptateur (130) étant configuré pour transmettre le code de signalisation de téléphonie et/ou les données vocales dudit autocommutateur privé (110) à ladite unité de téléphonie (145) et inversement.

6. Adaptateur (130) selon l'une des revendications précédentes, le message de protocole de commande de couche d'application étant un message de protocole d'initiation de session, SIP, et/ou un message de protocole de transport en temps réel, RTP, pour l'échange de médias.

7. Adaptateur (130) selon l'une des revendications précédentes, l'unité de téléphonie étant un téléphone numérique.

8. Adaptateur (130) selon l'une des revendications précédentes, le réseau de communications (150) étant un réseau IP.

9. Châssis d'adaptateur SIP (810) pour un réseau de communications téléphonique, comprenant une pluralité d'adaptateurs (130) selon l'une des revendications précédentes.

10. Châssis d'adaptateur SIP (810) selon la revendication 9, **caractérisé en ce qu'**il est connecté à un autocommutateur privé (110) et/ou un réseau téléphonique public commuté, RTPC, (185) par le biais dudit autocommutateur privé (110), un ou plusieurs téléphones (860, .., 870) et à un réseau IP (150).

11. Réseau de communications téléphonique comprenant une ou plusieurs unités de téléphonie (145, 160, 175) et un ou plusieurs adaptateurs (130) ou châssis d'adaptateur SIP (810) selon l'une des revendications précédentes.

12. Procédé d'exploitation d'un adaptateur (130) pour un réseau de communications téléphonique qui comprend une première unité de téléphonie (145, 175) et/ou un autocommutateur privé (110), le procédé comprenant :
Réception d'un code de signalisation de téléphonie de la part de ladite unité de téléphonie (145, 175) et/ou dudit autocommutateur privé (110) sur une interface de signalisation (730, 710) dudit adaptateur (130), le code de signalisation de téléphonie étant un code de signalisation et vocal numérique privé, PDSV, pour échanger la signalisation et la voix ;
Conversion du code de signalisation de téléphonie en un message de protocole de commande de couche d'application au moyen d'un processeur (740) connecté à ladite interface de signalisation (730, 710) ; Transmission du message de protocole de commande de couche d'application par le biais d'un réseau de communications (150) au moyen d'une interface de réseau (750) connectée au processeur (740) ;
Conversion d'un message de protocole de commande de couche d'application reçu par l'interface de réseau (750) en un code de signalisation de téléphonie pour le transmettre à l'unité de téléphonie (145) par le biais de l'interface de signalisation (730).

13. Procédé selon la revendication 12, **caractérisé en ce qu'**une deuxième unité de téléphonie (165) est abonnée auprès dudit adaptateur (130) pour recevoir le message de protocole de commande de couche d'application.

14. Procédé selon l'une des revendications 12 à 13, **caractérisé en ce que** l'adaptateur (130) permet à la première unité de téléphonie (145) d'accéder à une fonctionnalité d'autocommutateur privé associée audit code de signalisation de téléphonie.

15. Procédé selon l'une des revendications 13 à 14, **caractérisé par** le routage du message de protocole de commande de couche d'application vers la deuxième unité de téléphonie (165) à travers un serveur (155).

16. Procédé selon la revendication 15, **caractérisé en ce que** le serveur (155) détermine la deuxième unité de téléphonie (165) pour recevoir le message de protocole de commande de couche d'application et transmet le message de protocole de commande de couche d'application à la deuxième unité de téléphonie (165).

17. Procédé selon l'une des revendications 15 à 16, **caractérisé en ce que** ledit serveur (155) réalise un service de troisième correspondant pour la première unité de téléphonie (145) et/ou la deuxième unité de téléphonie (165).

18. Procédé selon l'une des revendications 12 à 17, le message de protocole de commande de couche d'application étant un message de protocole d'initiation de session, SIP, et/ou un message de protocole de transport en temps réel, RTP, pour l'échange de médias.

19. Procédé selon l'une des revendications 12 à 18, la première unité de téléphonie (145) étant un téléphone numérique.

20. Procédé selon l'une des revendications 12 à 19, la deuxième unité de téléphonie (165) étant un agent d'utilisateur SIP.

21. Procédé selon l'une des revendications 12 à 20, l'adaptateur (130) étant un adaptateur (130) selon l'une des revendications 1 à 8, notamment un adaptateur SIP (130).

22. Procédé selon l'une des revendications 12 à 21, l'adaptateur (130) permettant à la première unité de téléphonie (145) d'accéder à une fonctionnalité de serveur SIP associée audit code de signalisation de téléphonie.

23. Procédé selon la revendication 12, **caractérisé en ce que** ledit autocommutateur privé (110) reçoit ledit code de signalisation de téléphonie de la part de ladite unité de téléphonie (175) sous la forme d'un premier code de signalisation de téléphonie et convertit ledit premier code de signalisation de téléphonie reçu en un deuxième code de signalisation de téléphonie avant de transmettre ledit deuxième code de signalisation de téléphonie à ladite interface de signalisation (710) dudit adaptateur (130).

24. Procédé selon la revendication 23, une deuxième unité de téléphonie (145) connectée à l'adaptateur (130) recevant le deuxième code de signalisation de téléphonie ; un serveur (155) connecté au réseau de communications (150) routant le message de protocole de commande de couche d'application et communiquant avec l'adaptateur (130) ; et une troisième unité de téléphonie (165) connectée au serveur (155) recevant le message de protocole de commande de couche d'application.

25. Procédé selon la revendication 24, l'adaptateur (130) annulant le deuxième code de signalisation de téléphonie vers la deuxième unité de téléphonie (145) et maintenant le message vers la troisième unité de téléphonie (165) si la troisième unité de téléphonie (165) répond au message de protocole de commande de couche d'application avant que la deuxième unité de téléphonie (145) ne réponde au deuxième code de signalisation de téléphonie.

26. Procédé selon la revendication 25, la première unité de téléphonie (175) ayant accès à une fonctionnalité d'autocommutateur privé associée au code de signalisation de téléphonie.

27. Procédé selon la revendication 24, l'adaptateur (130) annulant le message de protocole de couche d'application vers la troisième unité de téléphonie (165) et maintenant le deuxième code de signalisation de téléphonie vers la deuxième unité de téléphonie (145) si la deuxième unité de téléphonie (145) répond au deuxième code de signalisation de téléphonie avant que la troisième unité de téléphonie (165) ne réponde au message de protocole de commande de couche d'application.

28. Procédé selon la revendication 27, la première unité de téléphonie (175) ayant accès à une fonctionnalité de protocole d'initiation de session associée au message de protocole de commande de couche d'application.

29. Procédé selon la revendication 24, le serveur (155) déterminant la troisième unité de téléphonie (165) pour recevoir le message de protocole de commande de couche d'application et transmettant le message de protocole de commande de couche d'application à la troisième unité de téléphonie (165).

30. Procédé selon la revendication 24, **caractérisé en ce que** ledit serveur (155) réalise un service de troisième correspondant pour la première unité de téléphonie (175) et/ou la troisième unité de téléphonie (165).

31. Procédé selon la revendication 24, le message de protocole de commande de couche d'application étant un message de protocole d'initiation de session, SIP, et/ou un message de protocole de transport en temps réel, RTP, pour l'échange de médias.

32. Procédé selon la revendication 24, la troisième unité de téléphonie (165) étant un agent d'utilisateur SIP.

33. Procédé selon la revendication 24, la première unité de téléphonie (175) et/ou la deuxième unité de téléphonie (145) étant un téléphone numérique.

34. Procédé selon la revendication 24, la première unité de téléphonie (175) étant un réseau téléphonique public commuté, RTPC.

35. Procédé selon la revendication 24, l'adaptateur (130) étant un adaptateur (130) selon l'une des revendications 1 à 8, notamment un adaptateur SIP (130).

36. Procédé selon la revendication 24, l'adaptateur (130) permettant à la première unité de téléphonie (175) d'accéder à une fonctionnalité de serveur SIP associée au code de signalisation de téléphonie.

37. Procédé selon la revendication 23, comprenant en outre : une deuxième unité de téléphonie (145) recevant le deuxième code de signalisation de téléphonie et une troisième unité de téléphonie (165) recevant le message de protocole de commande de couche d'application, ladite troisième unité de téléphonie (165) étant abonnée auprès de l'adaptateur (130) pour recevoir le message de protocole de commande de couche d'application.

38. Procédé d'exploitation d'un adaptateur (130) pour un réseau de communications téléphonique qui comprend une première unité de téléphonie (165), le procédé comprenant : Réception d'un message de protocole de commande de couche d'application transmis par ladite première unité de téléphonie (165) sur une interface de communication (750) dudit adaptateur (130) ; Conversion du message de protocole de commande de couche d'application en un code de signalisation de téléphonie au moyen d'un processeur (740) connecté à ladite interface de communication (750), le code de signalisation de téléphonie étant un code de signalisation et vocal numérique privé, PDSV, pour échanger la signalisation et la voix ; Réception dudit code de signalisation de téléphonie sur une deuxième unité de téléphonie (145) connectée audit adaptateur (130).

39. Procédé selon la revendication 38, l'adaptateur (130) permettant à la première unité de téléphonie (165) d'accéder à une fonctionnalité d'autocommutateur privé associée au message de protocole de commande de couche d'application.

40. Procédé selon la revendication 38, comprenant en outre le routage du message de protocole de commande de couche d'application transmis par la première unité de téléphonie (165) à travers un serveur (155).

41. Procédé selon la revendication 40, le serveur (155) permettant à la première unité de téléphonie (165) d'accéder à une fonctionnalité de serveur SIP associée au message de protocole de commande de couche d'application.

42. Procédé selon la revendication 40, le serveur (155) réalisant un service de troisième correspondant pour la première unité de téléphonie (165) et/ou la deuxième unité de téléphonie (145).

43. Procédé selon la revendication 39, le message de protocole de commande de couche d'application étant un message de protocole d'initiation de session, SIP, et/ou un message de protocole de transport en temps réel, RTP, pour l'échange de médias.

44. Procédé selon la revendication 38, la première unité de téléphonie (165) étant un agent d'utilisateur SIP.

45. Procédé selon la revendication 38, la deuxième unité de téléphonie (145) étant un téléphone numérique.

46. Procédé selon la revendication 38, dans lequel: un serveur (155) connecté à l'interface de communication reçoit un premier message de protocole de commande de couche d'application et génère un deuxième message de protocole de commande de couche d'application vers la première unité de téléphonie (165) et un troisième message de protocole de commande de couche d'application ; et l'adaptateur (130) reçoit le troisième message de protocole de commande de couche d'application, génère un quatrième message de protocole de couche d'application vers la première unité de téléphonie (165), la première unité de téléphonie (165) générant un cinquième message de protocole de commande de couche d'application vers l'adaptateur (130) et l'adaptateur (130) convertissant le cinquième message de protocole de commande de couche d'application en un premier code de signalisation de téléphonie.

47. Procédé selon la revendication 46, un autocommutateur privé (110) connecté à l'adaptateur (130) convertissant le premier code de signalisation de téléphonie en un deuxième code de signalisation de téléphonie et une deuxième unité de téléphonie (185) connectée au autocommutateur privé (110) recevant le deuxième code de signalisation de téléphonie.

48. Procédé selon la revendication 47, la première unité de téléphonie (165) ayant accès à une fonctionnalité de protocole d'initiation de session, SIP, associée au premier message de protocole de commande de couche d'application.

49. Procédé selon la revendication 48, le serveur (155) réalisant un service de troisième correspondant pour la première unité de téléphonie (165).

50. Procédé selon la revendication 46, le message de protocole de commande de couche d'application étant un message de protocole d'initiation de session, SIP, pour l'échange de médias et/ou un message de protocole de transport en temps réel, RTP, pour l'échange de médias.

51. Procédé selon la revendication 46, le code de signalisation de téléphonie étant un code de signalisation et vocal numérique privé, PDSV, pour échanger la signalisation et la voix.

52. Procédé selon la revendication 46, la première unité de téléphonie (165) étant un agent d'utilisateur SIP.

53. Procédé selon la revendication 47, la deuxième unité de téléphonie (185) étant un réseau téléphonique public commuté, RTPC.

54. Procédé selon la revendication 46, l'adaptateur (130) étant un adaptateur (130) selon l'une des revendications 1 à 8, notamment un adaptateur SIP (130).
